# EUROPEAN PATENT SPECIFICATION

(11) **EP 3 025 324 B1**
(45) Date of publication and mention of the grant of the patent: **13.03.2019**
(21) Application number: 14830004.9
(22) Date of filing: 23.07.2014
(51) Int. Cl.: G09G 3/34, G02B 19/00, G02F 1/13, G03B 21/00, G03B 21/14, G09G 3/20, G09G 3/36, H04N 9/31

(54) **INFORMATION PROCESSING DEVICE, IMAGE PROJECTING SYSTEM, AND COMPUTER PROGRAM**
INFORMATIONSVERARBEITUNGSVORRICHTUNG, BILDPROJEKTIONSSYSTEM UND COMPUTERPROGRAMM
DISPOSITIF DE TRAITEMENT D'INFORMATIONS, SYSTÈME DE PROJECTION D'IMAGE ET PROGRAMME INFORMATIQUE

(30) Priority: 24.07.2013 JP 2013153945; 25.12.2013 JP 2013267943
(43) Date of publication of application: 01.06.2016
(73) Proprietor: Ricoh Company, Limited, Tokyo 143-8555 (JP)
(72) Inventor: SUMIYOSHI, Shinichi, Tokyo 143-8555 (JP); NAKASHIGE, Fumihiro, Tokyo 143-8555 (JP); NAKATA, Otoichi, Tokyo 143-8555 (JP)
(74) Representative: White, Duncan Rohan
(86) International application number: PCT/JP2014/069986
(87) International publication number: WO 2015/012409

(56) References cited:
- WO-A1-01/99045
- WO-A1-2006/085580
- JP-A- 2009 258 630
- JP-A- 2011 108 251
- JP-A- 2012 113 564
- JP-A- 2012 230 653
- US-A1- 2001 045 940
- US-A1- 2004 041 786
- US-A1- 2006 022 942
- US-A1- 2008 024 443
- US-A1- 2009 058 805
- US-A1- 2009 207 384

## Description

### TECHNICAL FIELD

The present invention relates to an information processing device, an image projecting system, and a computer program.

### BACKGROUND ART

Projectors project images such as characters and graphs onto a screen in a magnified manner and are widely used for presentation to a large number of people. A presenter in some cases points out the image projected onto the screen using a laser pointer or the like in order to make explanation understandable in the presentation. There is, however, a problem in that the presenter cannot point out a desired place accurately due to hand shake when the presenter directly points out the projected image with the laser pointer. To solve this problem, a technique has been already known in which a charge coupled device (CCD) camera incorporated in the projector detects a spot irradiated by the laser pointer of the user and displays a pointer image on the same spot as the irradiated spot, as disclosed in Patent Literature 1.

However, when the spot irradiated by the laser pointer is detected from an image shot by the camera as in the conventional technique, a problem may arise in that the spot irradiated by the laser pointer cannot be detected depending on what is projected if the color or sense of brightness is similar between the laser beam of the laser pointer and the projected image.

The present invention has been made in view of the above-mentioned circumferences, and an object thereof is to provide an information processing device, an image projecting system, and a computer program that are capable of detecting an irradiation point by an irradiation device such as a laser pointer with high accuracy.

### Citation List

### Patent Literature

Patent Literature 1: Japanese patent Application Laid-open No. 11-271675.

US 2004/0041786 A1 and US 2001/0045940 A1 also disclose prior art of relevance.

### SUMMARY OF THE INVENTION

An image projecting system is proposed as defined in appended claim 1.

### BRIEF DESCRIPTION OF DRAWINGS

FIG. 1 is a general view illustrating a usage mode of an image projecting device according to a first embodiment.
FIG. 2 is a view illustrating the internal configuration of hardware of the image projecting device in the first embodiment.
FIG. 3 is a block diagram illustrating the functional configuration of the image projecting device and an external personal computer (PC) in the first embodiment.
FIG. 4 is a view illustrating an example of a projected pattern in the first embodiment.
FIG. 5 is a view illustrating seven segments Cy-W-R-MY-G-B of a color wheel in the first embodiment.
FIG. 6 is a view illustrating a correlation between the seven filters of the color wheel and RGB data when image signal is projected through the filters on a projection surface in the first embodiment.
FIG. 7 is a view illustrating a relation between projection light colors and the seven segments through which projection light passes in one cycle of the color wheel and;
FIG. 8 is a view illustrating pieces of image data when a laser pointer emits laser beams of red, green, and blue onto a projected image.
FIG. 9 is a view illustrating detected points from the laser pointers when the laser beams from the laser pointer that have been projected onto the projected image are shot at timings A, B, and C.
FIG. 10 is a view illustrating a relation between a rotating cycle of the color wheel and a shooting cycle of a shooting camera in order to detect the laser beam from the laser pointer of a single color.
FIG. 11 is a view illustrating a relation among the rotating cycle of the color wheel, the shooting cycle of the shooting camera, and the shutter timing in order to detect the laser beams from the laser pointers of a plurality of colors.
FIG. 12 is a flowchart illustrating a process flow of calculating a projective transformation coefficient and detecting the laser beam from the laser pointer.
FIG. 13 is a general view illustrating an example of a projection mode of the laser beam from the pointer on the image projecting device in the first embodiment.
FIG. 14 is a general view illustrating another example of the projection mode of the laser beam from the pointer on the image projecting device in the first embodiment.
FIG. 15 is a view illustrating another example of the projected pattern in the first embodiment.
FIG. 16 is a view illustrating the internal configuration of hardware of an image projecting device according to a second embodiment.
FIG. 17 is a view illustrating a relation between a projection timing of an image signal and a shutter timing of a shooting camera in order to detect the laser beam from a laser pointer.
FIG. 18 is a sectional view illustrating an example of a screen of a stress luminescent material.
FIG. 19 is a view illustrating a state where a portion of the screen that is pressed by a user emits light.
FIG. 20 is a block diagram illustrating the functional configurations of an image projecting device and an external PC according to a third embodiment.
FIG. 21 is a view illustrating a state where a particular image is displayed on a particular portion of the screen when the particular portion is pressed.

### DESCRIPTION OF EMBODIMENTS

### First Embodiment

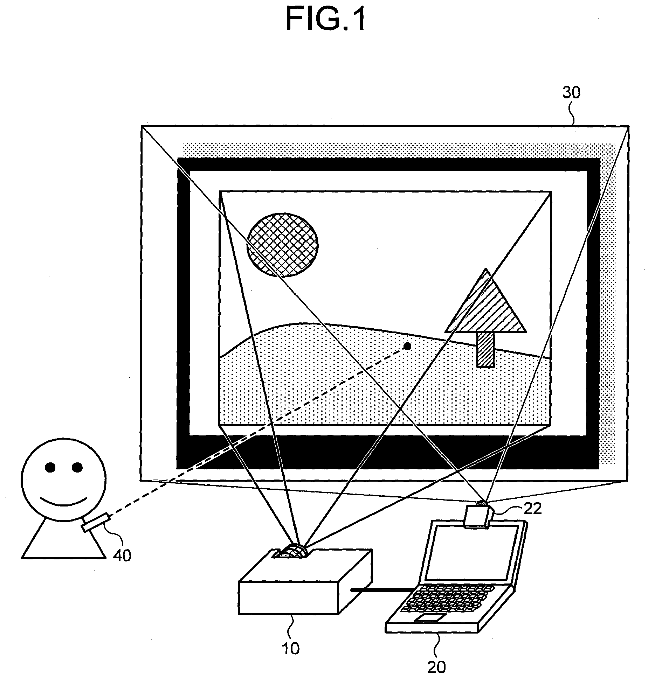

Hereinafter, a first embodiment that embodies an image projecting device according to the present invention is described with reference to the accompanying drawings. FIG. 1 is a general view illustrating an image projecting system including the image projecting device. This image projecting device 10 is connected to an external PC 20 and projects image data such as still images and moving images input from the external PC 20 onto a screen 30 as a projection surface. FIG. 1 illustrates the case where a user uses a laser pointer 40 as an irradiation device. A camera unit 22 is connected to the external PC 20. The camera unit 22 may be provided as external hardware or may be incorporated in the external PC 20.

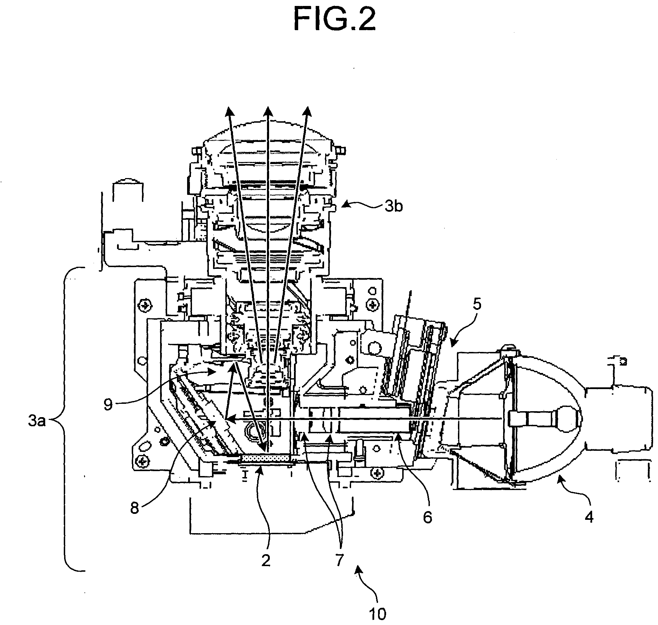

FIG. 2 is a view illustrating the internal configuration of hardware of the image projecting device. As illustrated in FIG. 2, the image projecting device 10 includes an optical system 3a and a projecting system 3b. The optical system 3a includes a color wheel 5, a light tunnel 6, a relay lens 7, a plane mirror 8, and a concave mirror 9. These members are each provided in the main body of the image projecting device 10. Furthermore, the image projecting device 10 is provided with an image forming unit 2. The image forming unit 2 includes a digital micromirror device (DMD) as an image forming element for forming an image.

The color wheel 5 having a disc shape converts white light emitted from a light source 4 into light of which color is repeatedly changed among RGB at unit time intervals, and emits the light to the light tunnel 6. The embodiment describes the configuration of detecting the laser beam from the laser pointer in the image projecting device 10 including the color wheel 5. In this example, it can be considered that the laser pointer corresponds to a "light spot device" in claims. The detailed configuration of the color wheel 5 will be described later. The light tunnel 6 has a tubular form of glass plates bonded to each other and guides the light through the color wheel 5 to the relay lens 7. The relay lens 7 includes two lenses in combination and concentrates the light from the light tunnel 6 while correcting the axial chromatic aberration of the light. The plane mirror 8 and the concave mirror 9 reflect the light from the relay lens 7 and guide the light to the image forming unit 2, thereby concentrating the light. The image forming unit 2 includes a DMD that has a rectangular mirror surface formed by a plurality of micromirrors driven in a time-division manner based on data of a video or a still image. The DMD processes and reflects the projected light to form particular image data.

The light source 4 is a high-pressure mercury lamp, for example. The light source 4 emits white light to the optical system 3a. In the optical system 3a, the white light emitted from the light source 4 is divided into light components of RGB and guided to the image forming unit 2. The image forming unit 2 forms an image in accordance with a modulation signal. The projecting system 3b projects the formed image in a magnified manner.

An OFF light plate is provided at an upper portion in the vertical direction of the image forming unit 2 illustrated in FIG. 2, that is, at the near side in FIG. 2. The OFF light plate receives unnecessary light that is not used as a projection light out of the light entering the image forming unit 2. When the light enters the image forming unit 2, a plurality of micromirrors are activated by operations of the DMD in a time-division manner based on image data. The micromirrors reflect the light to be used to projection lenses and reflect the light to be discarded to the OFF light plate. In the image forming unit 2, the light to be used for a projected image is reflected to the projecting system 3b and magnified through the projection lenses, and then, the magnified image light is projected.

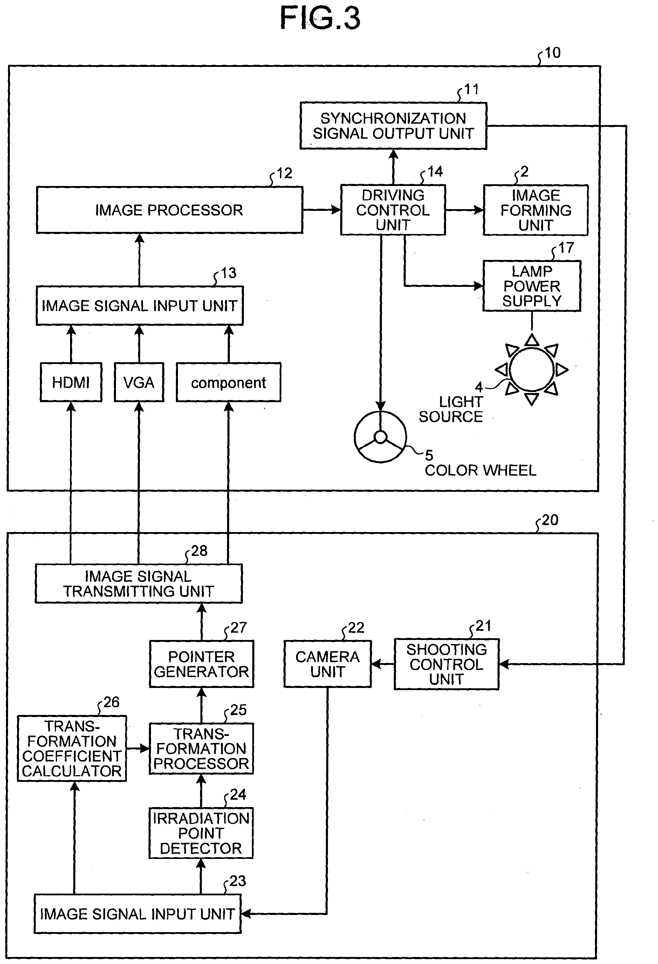

FIG. 3 is a block diagram illustrating the functional configuration of the image projecting device 10 and the external PC 20. The image projecting device 10 controls input of an image signal so as to synchronize with driving of the projecting system 3b and the optical system 3a. As illustrated in FIG. 3, the image projecting device 10 includes a synchronization signal output unit 11, an image processor 12, an image signal input unit 13, and a driving control unit 14. The external PC 20 includes a shooting control unit 21, the camera unit 22, an image signal input unit 23, an irradiation point detector 24 (light spot image detector), a transformation processor 25, a transformation coefficient calculator 26, a pointer generator 27, and an image signal transmitting unit 28.

First, digital signals such as of HDMI (registered trademark) and analog signals such as of video graphics array (VGA) and a component signal are input to the image signal input unit 13 of the image projecting device 10. The image signal input unit 13 processes an image into an RGB or YPbPr signal in accordance with the input signal. When the input image signal is the digital signal, the image signal input unit 13 converts it into a bit format defined by the image processor 12 in accordance with the bit number of the input signal. When the input image signal is the analog signal, the image signal input unit 13 performs digital-to-analog conversion (DAC) processing for digital-sampling the analog signal, and the like, and inputs an RGB or YPbPr format signal to the image processor.

The image processor 12 performs digital image processing and the like in accordance with the input signal. To be specific, the image processor 12 performs appropriate image processing based on the contrast, brightness, intensity, hue, RGB gain, sharpness, and a scalar function such as enlargement and contraction or characteristics of the driving control unit 14. The input signal after the digital image processing is transmitted to the driving control unit 14. Furthermore, the image processor 12 can generate an image signal of a layout that is desirably specified or registered.

The driving control unit 14 determines driving conditions of: the color wheel 5 that adds colors to the white light in accordance with the input signal; the image forming unit 2 that selects output of light; and a lamp power supply 17 that controls the driving current of a lamp. The driving control unit 14 issues driving directions to the color wheel 5, the image forming unit 2, and the lamp power supply 17.

Next, the configuration of the external PC 20 is described. The external PC 20 executes a process flow of shooting a projected pattern projected by the image projecting device 10 and determining a projective transformation coefficient based on a deviation between coordinates on the projected pattern and coordinates on the image data, and a process flow of detecting the emitted laser beam from the pointer. First, the process flow of shooting the projected pattern is described.

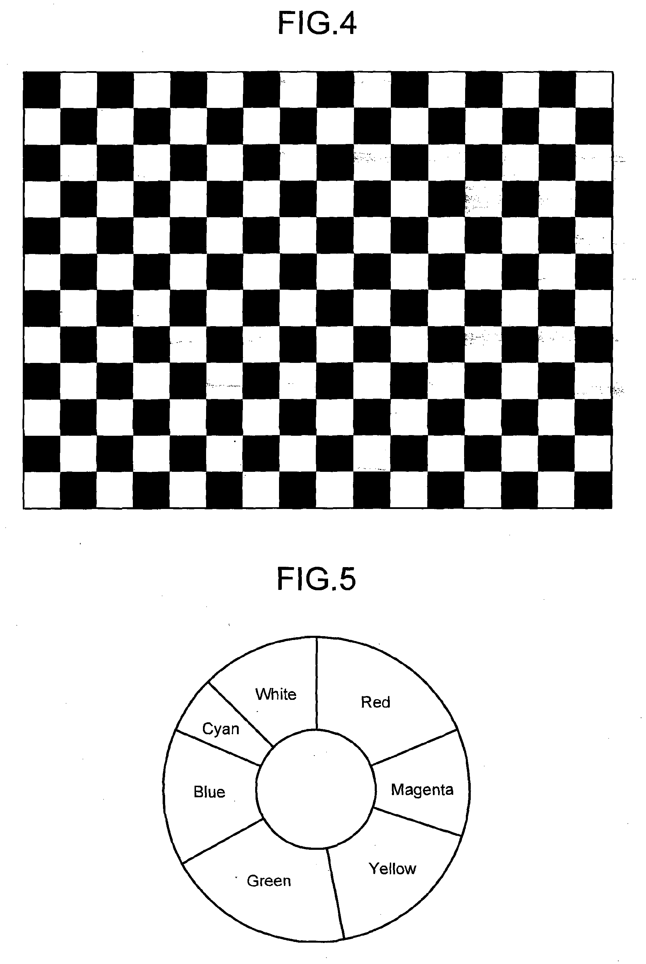

The shooting control unit 21 of the external PC 20 receives a synchronization signal from the synchronization signal output unit 11 and issues a shooting direction to the camera unit 22. In the case where an image shot by the camera unit 22 is input to the image projecting device 10, the image signal input unit 23 performs shading correction, Bayer conversion, color correction, and the like on the shot camera image to generate an RGB signal. The external PC 20 generates a projected pattern as illustrated in FIG. 4, and the image projecting device 10 projects the generated pattern.

The camera unit 22 shoots a scene including the screen 30 (the projection surface) in which the projected pattern is projected and its vicinity. Examples of the shooting method by the camera unit 22 include the global shutter method and the rolling shutter method. The global shutter method causes all the pixels to be exposed to light at the same time and requires a circuit that is more complex than that required in the rolling shutter method for the respective pixels, while it has an advantage in that all the pixels can be exposed at once to perform imaging. The rolling shutter method, which causes the pixels to be exposed to light in a sequentially scanning manner, can be achieved by a simple circuit and perform imaging by scanning. In the rolling shutter method, however, strain or the like may be generated in shooting an object moving at a high speed, because the shooting timing is different among the pixels. The shutter speed of the camera unit 22 is desirably controlled by the shooting control unit 21. The shooting control unit 21 determines the shutter speed required for a shooting having a time length of the timing specified by the synchronization signal, based on the rotating speed of the color wheel, for example, thereby controlling the shutter speed. The irradiation point detector 24 acquires coordinates of respective lattice points on the projection surface that is being projected, based on the shot image. The transformation coefficient calculator 26 calculates a projective transformation coefficient H that makes a correlation between coordinates (x, y) on the image signal of the projected pattern and coordinates (x', y') on the shot image, and sets the parameter H in the transformation processor 25. The irradiation point detector 24 extracts the coordinates of an irradiation point on the projection surface. The transformation processor 25 performs projective transformation on the coordinates (x', y') of the detected irradiation point using the parameter H of the corresponding lattice point, so that the coordinates (x', y') of the detected irradiation point are transformed into coordinates (x, y) of the irradiation point on the image signal. In this example, the "irradiation point" corresponds to a "light spot" in claims. Furthermore, in this example, the "irradiation-point image" corresponds to a "light spot image" in claims. Subsequently, the pointer generator 27 (light spot image generator) generates irradiation-point image data (projection image data) at the coordinates (x, y). The irradiation-point image data may be a circular shape having a radius for z pixels about the coordinates (x, y), a pointer image registered in advance, or the like that is generated by any desired method. The external PC 20 performs therein the calculation to generate a projection image signal, and the projection image signal is transmitted to the image signal transmitting unit 28. The image processor 12 of the image projecting device 10 superimposes the image signal generated by the pointer generator 27 on the image signal and performs any desired image processing thereon. The image processor 12 of the image projecting device 10 then outputs a control signal to the driving control unit 14. Thereafter, the image projecting device 10 projects a projected image on which the pointer image is superimposed.

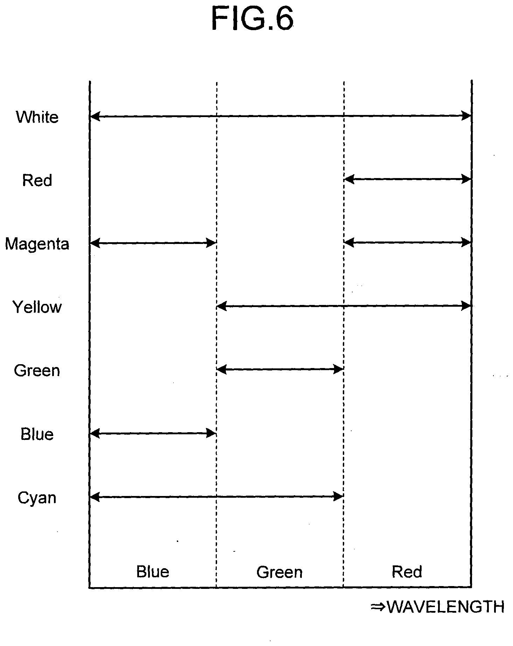

The detection of the coordinates of the point irradiated by the pointer on the projection surface or its vicinity is performed by the irradiation point detector 24 in the following process flow. FIG. 5 is a view illustrating seven filters of the color wheel that correspond to a plurality of colors cyan, white, red, magenta, yellow, green, and blue. FIG. 6 illustrates a correlation between the filters of the color wheel and the RGB data (i.e., camera shot images) when the image signal is projected through the filters on the projection surface. For example, in the case of the red segment (red filter), the data value of Red occupies a large part in the RGB data. Further, in the case of red segment, the transmittance of light components of Green and Blue is small, and thus the light components of these colors are limited. In the same manner, the light components of Blue and Green pass through the cyan segment, which is a secondary color, and all the light components of RGB pass through the white segment, which is a third color.

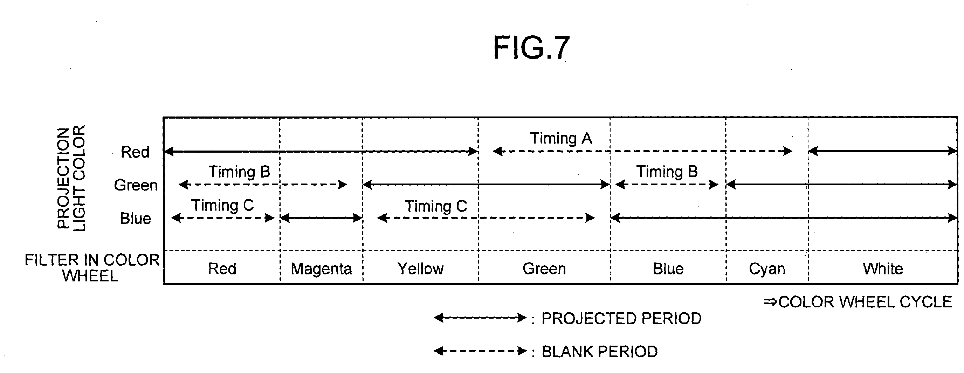

FIG. 7 is a view illustrating a relation between the projection light colors and filters through which the projection light passes in one cycle of the color wheel. It should be noted that the light color has a concept including both the light color of a lamp itself as the light source and the color that can be visually recognized from the light projected from the device. A projected period as indicated by arrows of solid lines in FIG. 7 indicates a time period during which an image signal of the projection light color is projected through the corresponding filter(s) of the color wheel 5. For example, focusing on the projection light color of red, components classified as red correspond to red, magenta, yellow, and white segment sections. On the other hand, during a blank period indicated by an arrow of a dashed line of "Timing A", an image signal is not projected. That is to say, in green, blue, and cyan segment sections corresponding to the blank period of "Timing A", even when the projection light of red is projected, the image signal is not projected actually. Accordingly, even the red beam from the laser pointer is easy to be detected.

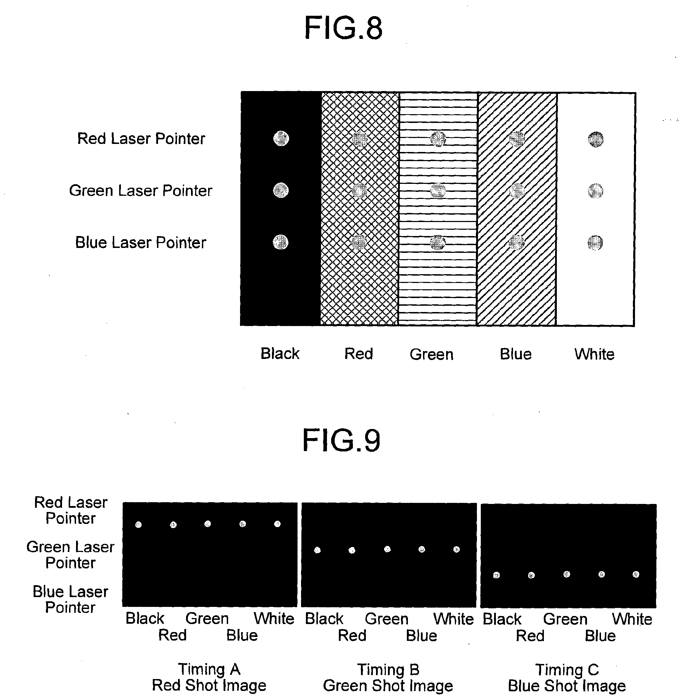

Thus, in the embodiment, laser beam spots (the irradiation points) of R, G, and B from the laser pointers that are emitted to the projected pattern (projected image) are shot and detected in synchronization with the timings. FIG. 8 is a view illustrating pieces of image data when the laser beams of red, green, and blue from the laser pointers are emitted to a projected image. FIG. 9 is a view illustrating detected points when the laser beams of the laser pointer that have been projected onto the projected image are shot at "Timing A", "Timing B", and "Timing C". "Timing A Red Shot Image" in FIG. 9 illustrates image data obtained by the camera unit 22 in synchronization with "Timing A". The synchronization with "Timing A" is achieved in the following manner. That is, the driving control unit 14 of the image projecting device 10 transmits a direction to the synchronization signal output unit 11 at the timing at which the driving control unit 14 performs control to drive the color wheel 5. That is to say, the shooting control unit 21 (receiver) receives a synchronization signal at the timing at which the color wheel 5, which rotates at a fixed frequency (in the embodiment, 120 Hz), enters the blank period of "Timing A".

The red image signal is not projected during the blank period of "Timing A", so that the red irradiation point from the laser pointer is detected easily. Thus, detection accuracy in detecting the red irradiation light from the pointer is improved by shooting the projected image by the camera unit 22 in synchronization with "Timing A". In the same manner, the green image signal is not projected on "Timing B Green Shot Image" during a blank period of "Timing B", so that detection accuracy of the green irradiation light from the laser pointer is improved. In addition, the blue image signal is not projected on "Timing C Blue Shot Image" during a blank period of "Timing C", so that the blue irradiation point from the laser pointer is easy to detect. Thus, specific colors are easy to detect depending on the detection timings, and a plurality of irradiation points can be detected simultaneously by utilizing the timings effectively.

The following explains a method of synchronizing the shooting by the camera unit 22 with the driving of the color wheel 5. The color wheel 5 itself is provided with a black seal as an indicator for detecting rotation, and a holder of the color wheel 5 is provided with a sensor for detecting the black seal. The driving control unit 14 acquires the detection timing of the black seal from the sensor to make a direction to generate a synchronization signal. The synchronization signal to be generated is synchronized with a period during which a color closest to the set color of the irradiation point of the laser pointer is not projected. This allows the camera unit 22 that performs shooting to control the shutter timing of shooting in accordance with the synchronization signal of the color wheel.

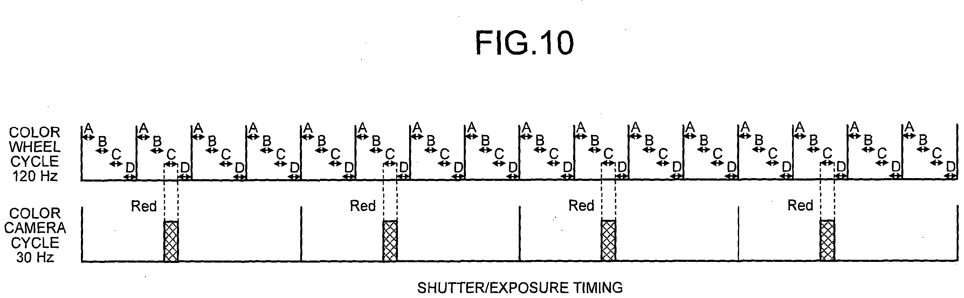

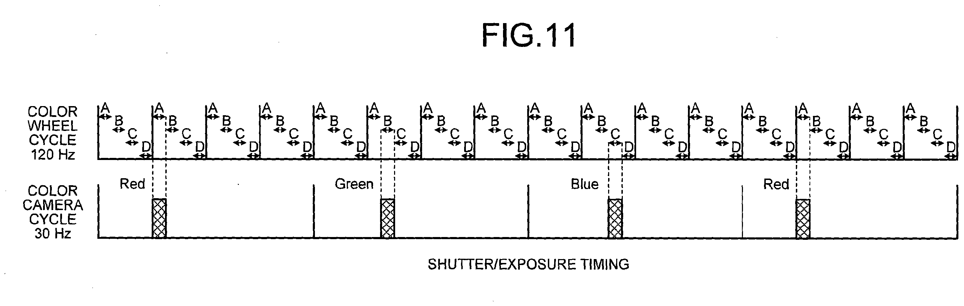

FIG. 10 and FIG. 11 each illustrate a relation between the rotation cycle of the color wheel and the shooting cycle (shutter/exposure timing) of the shooting camera. The color wheel 5 rotates at a cycle of 120 Hz, and the shooting camera shoots the scene including the projection surface and its vicinity at a cycle of 30 Hz. In the embodiment, the camera unit 22 can shoot once while the color wheel 5 rotates 4 times. FIG. 10 illustrates an example of the timings at which shooting is synchronized when the laser pointer emits the red laser beam. It should be noted that the color of the laser beam from the laser pointer is input and set by the user through an operation interface of the image projecting device 10 or the external PC 20 (a setting unit), and thus the external PC 20 can recognize the color. In the embodiment, it is assumed that the sections C correspond to the blank periods for red, that is, green, blue, and cyan segments of the color wheel 5 corresponding to the blank periods of "Timing A". In this case, the camera unit 22 performs exposure in one section C in a first cycle for shooting. Through observation of an image shot at this time, the red irradiation point from the laser pointer can be detected.

Normally, light is emitted to the screen 30 when the image forming unit 2 is ON whereas light is not emitted thereto when the image forming unit 2 is OFF. In the above-mentioned example, even when the image forming unit 2 is ON, shooting is performed in synchronization with the corresponding timing, so that the irradiation point can be detected from any color data among RGB. That is to say, the irradiation point from the laser pointer 40 can be detected regardless of the content of an image.

FIG. 11 is a view illustrating a synchronization method when the laser pointers emit light beams of a plurality of colors. The camera unit 22 performs exposure in one section A in a first cycle for shooting. In this case, the section A corresponds to the blank period of "Timing A". Through observation of image data shot at this timing, the red irradiation point from the laser pointer can be detected. The camera unit 22 performs exposure in a section B in a second cycle for shooting. The section B corresponds to the blank period of "Timing B". Through observation of image data shot at this timing, the green irradiation point from the laser pointer can be detected. In the same manner, the blue irradiation point from the laser pointer can be detected in a third cycle. Subsequently, control is performed in the same manner. In the above-mentioned case, the synchronization signal includes three timings of "Timing A" in the first cycle, "Timing B" in the second cycle, and "Timing C" in the third cycle. Meanwhile, when a plurality of pointers of the same color are used, a plurality of points can be detected in the screen with no problem.

In the above-mentioned example, one camera detects irradiation points of a plurality of colors from the laser pointers. Alternatively, cameras may be mounted for the respective colors to be detected to perform control to detect the respective colors. This can prevent shooting tasks of the cameras from being occupied by other colors, so that detection time of the respective single colors can be shortened. In this case, it is desired that timings corresponding to the respective camera units are set previously. That is to say, for example, if three camera units are provided so as to correspond to three colors of RGB, the irradiation points of the respective colors from the laser pointers can be detected in every cycle.

To detect an intermediate color in addition to the above-mentioned colors, it is sufficient that the periods of "Timing A", "Timing B", and "Timing C" are further divided for each color. In this case, the intermediate color can also be detected for each segment of the color wheel 5 by shooting at a timing corresponding to the intermediate color to be detected.

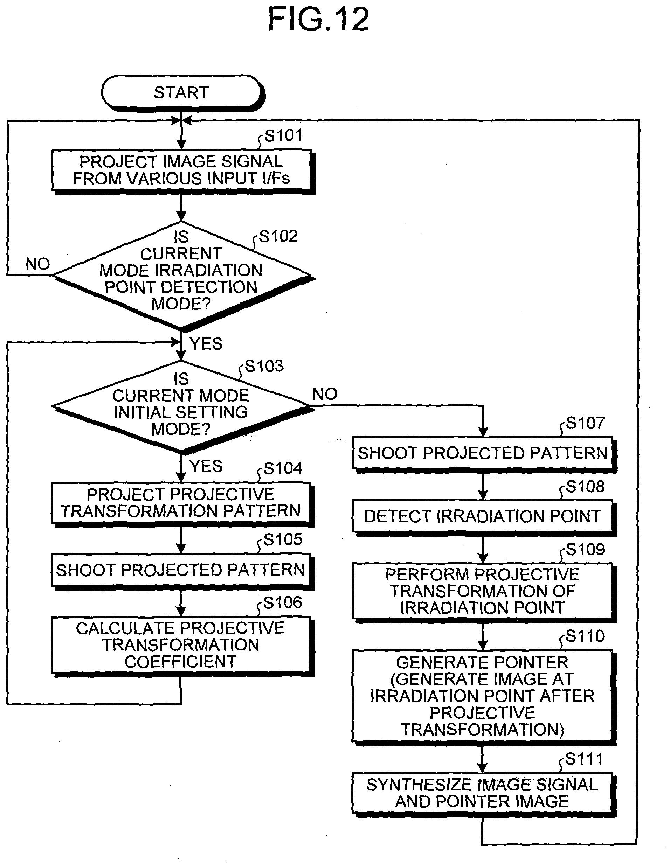

Next, the process flow of calculating the projective transformation coefficient and detecting the laser beam from the laser pointer is described with reference to FIG. 12. The process as illustrated in FIG. 12 is performed on a frame-by-frame basis in the input image signal. As illustrated in FIG. 12, first, the driving control unit 14 performs processing for projecting the image signal input from the input I/F of the image signal (step S101). Subsequently, the shooting control unit 21 determines whether the current mode is an irradiation-point detection mode (step S102). In the irradiation-point detection mode, the irradiation point from an irradiation device on the screen 30 is detected. The irradiation-point detection mode is activated by operating an operation screen, a button, or the like when the user uses the laser pointer, for example. When it is determined that the current mode is not the irradiation-point detection mode (No at step S102), the process returns to S101 and advances to a subsequent frame of the image signal.

When it is determined that the current mode is the irradiation-point detection mode (Yes at step S102), the shooting control unit 21 determines whether it is an initial setting mode (step S103). In the initial setting mode, calculation of the projective transformation coefficient is performed when projection environments are changed. Activating the irradiation-point detection mode for the first time will make the initial setting mode. The shooting control unit 21 may make the determination by determining whether the projective transformation coefficient is set or whether a certain period of time has passed after the projective transformation coefficient is set. The projective transformation coefficient is a coefficient for correcting a deviation between coordinates on the image signal before the projection and coordinates on the image pattern after the projection.

When it is determined that the current mode is the initial setting mode (Yes at step S103), the driving control unit 14 drives the image forming unit 2 and other components to project the image pattern (see FIG. 4) for projective transformation (step S104). Subsequently, the shooting control unit 21 is notified of the projection of the image pattern from the driving control unit 14 through the synchronization signal output unit 11 and shoots the projected image pattern (step S105). The transformation coefficient calculator 26 then measures the deviation between the coordinates on the image pattern shot by the camera unit 22 that is input through the image signal input unit 23 and the coordinates on the data of the projected image pattern, and calculates the projective transformation coefficient such that the coordinates on the two pieces of data are identical (step S106). The calculated projective transformation coefficient is saved, and the process returns to step S103.

When the projective transformation coefficient is set and thus it is determined that the current mode is not the initial setting mode (No at step S103), the shooting control unit 21 shoots the projected pattern at a shooting timing transmitted from the synchronization signal output unit 11 (step S107). The shooting timing is determined based on the color of the laser beam emitted from the laser pointer as described above. Thus, the irradiation point detector 24 can detect the irradiation point from the laser pointer from the shot image data (step S108). The coordinates of the detected irradiation point are input to the transformation processor 25, and the transformation processor 25 performs projective transformation on the coordinates of the irradiation point into the coordinates on the image data, using the projective transformation coefficient calculated by the transformation coefficient calculator 26 (step S109). The data of the coordinates obtained by the projective transformation is transmitted to the image projecting device 10. The image processor 12 generates pointer image data to be combined at the received coordinates on the original image signal to be projected (step S110), and combines the image signal and the pointer image data (step Sill). That is to say, the image processor 12 generates a projection image data to which a particular image is added in accordance with the position of the detected irradiation point.

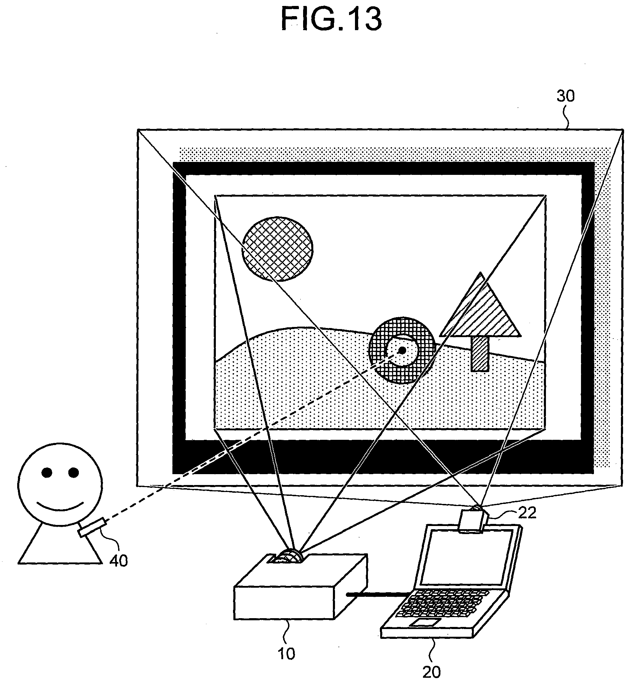

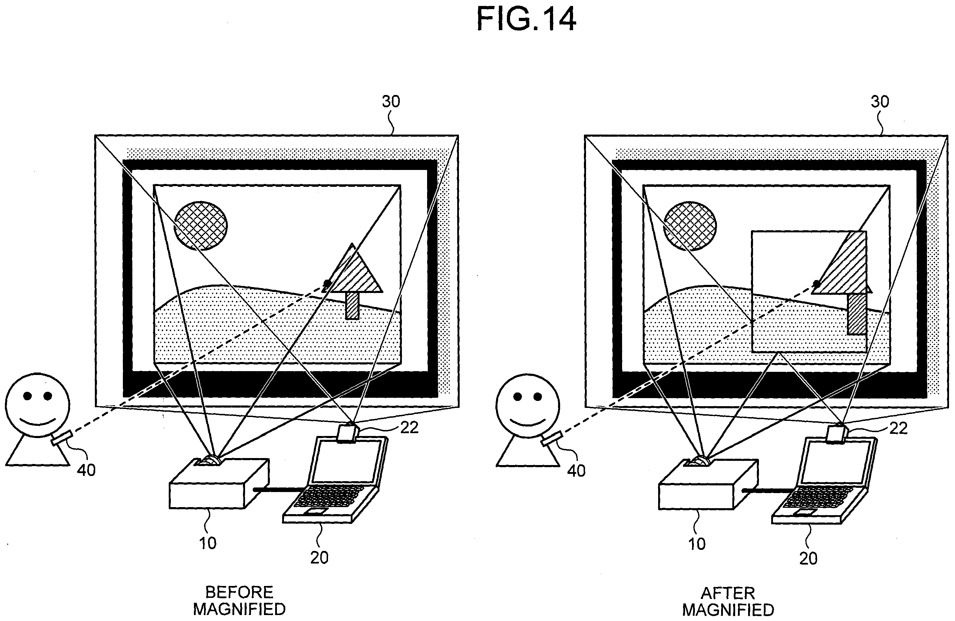

In this case, for example, in order to improve visibility, the irradiation point from the laser pointer 40 can be projected as the combined pointer about the calculated irradiation point in a larger size than the original size, as illustrated in FIG. 13. In this case, the large pointer on the image can be easy to view. As in FIG. 14, the image processor 12 may project the image data with a part around the calculated irradiation point magnified with reference to the coordinates of the irradiation point, as an alternative to magnifying the laser beam from the pointer.

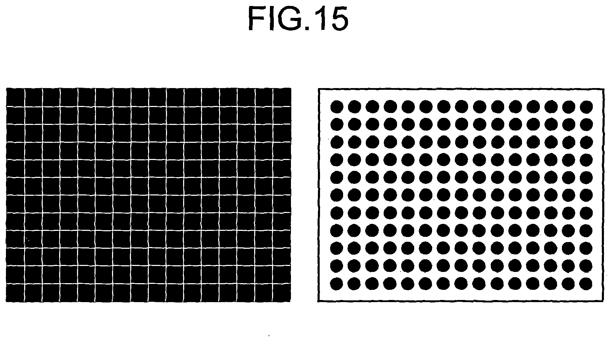

As an example of the projected pattern that is projected when the projective transformation coefficient is calculated, a grid pattern or a circular pattern as illustrated in FIG. 15 may be used instead of the projected pattern as illustrated in FIG. 4. When the circular projected pattern is used, accurate coordinates can be obtained by taking the gravity center even if projective deformation occurs and the coordinates are deviated. The grid pattern can prevent the deviation itself of the coordinates, and the pattern can be extracted with higher accuracy as long as there is no disturbance due to environment light.

The external PC 20 as the information processing device is connected to the image projecting device 10 locally. Alternatively, an information processing device connected to the image projecting device 10 through a network may perform calculation and synchronization of shooting. For example, a high-performance operation processing server on a network may be used to perform matrix operation of initial projective transformation, and content or the like to be superimposed may be downloaded to be used for image processing.

### Second Embodiment

Next, a second embodiment is described. In the second embodiment, an information processing device not for image projection using the color wheel but for image projection by a liquid-crystal image projecting device is used. When the image projecting device using the color wheel projects an image, the filters of the color wheel through which light passes are changed by time unit. Projection corresponding to the image signal for one frame is completed while the color wheel rotates for one cycle. In contrast, the liquid-crystal image projecting device projects the image signal for one frame without being divided by time unit. The second embodiment is different from the first embodiment in that the camera unit 22 shoots in consideration of the above-mentioned point.

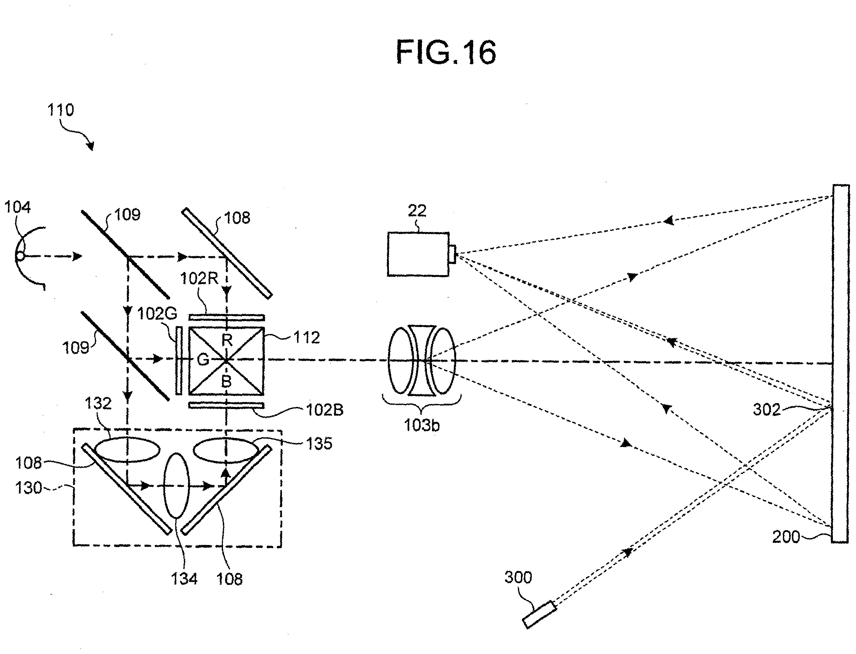

FIG. 16 is a view illustrating the hardware configuration of the image projecting device in the second embodiment. As illustrated in FIG. 16, an image projecting device 110 is provided with a white light source 104 that emits white light, such as a halogen lamp. The white light emitted from the white light source 104 is separated into light components of three primary colors of RGB by three mirrors 108 and two dichroic mirrors 109 arranged in the image projecting device 110. Among the lights, the R-color light is guided to a liquid crystal display panel 102R, the G-color light is guided to a liquid crystal display panel 102G, and the B-color light is guided to a liquid crystal display panel 102B. The liquid crystal display panel 102R functions as a light modulator for generating a primary color image of R. In the same manner, the liquid crystal display panel 102G and the liquid crystal display panel 102B function as light modulators for generating primary color images of G and B, respectively. The liquid crystal display panels 102R, 120G, and 120B are driven by the driving control unit 14, and transmit light when they are ON and shield light when they are OFF. Thus, light having a desired color tone and corresponding to the image data is projected by controlling ON and OFF of the respective panels in accordance with the color of the image data that is desired to be generated. The optical length of the B-color light is longer than those of the R-color light and G-color light, so that the B-color light is guided through a relay lens system 130 including an incident lens 132, a relay lens 134, and an output lens 135 in order to prevent light loss.

The light components modulated by the liquid crystal display panel 102R, the liquid crystal display panel 102G, and the liquid crystal display panel 102B, that is, the respective primary color images enter a dichroic prism 112 in three directions. The R light component and the B light component are refracted by 90 degrees by the dichroic prism 112 while the G light component travels straight, so that the respective primary color images are combined to form a color image. The color image enters a lens group 103b. The camera unit 22 shoots an image and a fiducial line projected onto a screen unit 200 together with an irradiation point 302 that the user points out using a laser pointer 300.

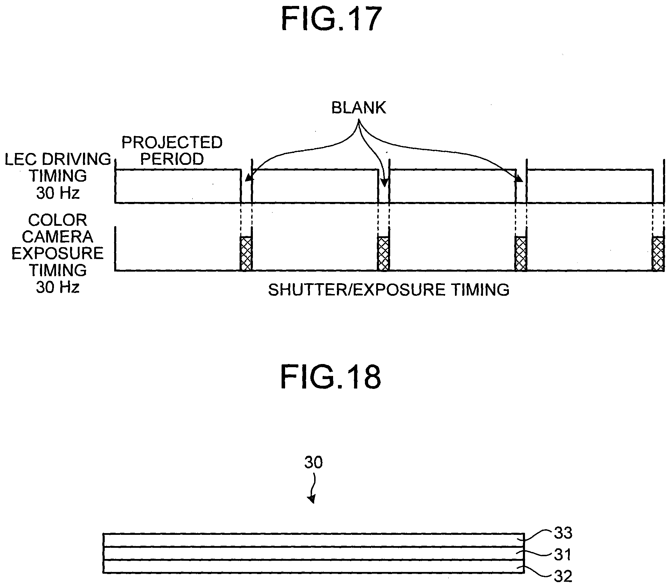

Next, a method of synchronizing the image data projected by the image projecting device 110 having the configuration is described. FIG. 17 illustrates driving control of the liquid crystal display panels and camera exposure timings. As illustrated in FIG. 17, periods during which light components pass through the liquid crystal display panels and periods (blank periods) during which none of the light components passes through the liquid crystal display panels are provided in a period during which respective image frames can be projected. The synchronization signal output unit 11 specifies the blank periods, and the camera unit 22 performs exposure for shooting in the blank periods.

### Third Embodiment

Next, a third embodiment is described. Descriptions of parts common to those in the above-mentioned embodiments are omitted as appropriate. In the embodiment, the screen 30 as the projection surface is formed using a stress luminescent material that emits light upon reception of force. For example, as illustrated in FIG. 18, the screen 30 may be a laminated body having a three-layer structure of a stress luminescent material 31, a base member 32 having a region on which the stress luminescent material 31 is provided, and a protection member 33 for covering the stress luminescent material provided on the base member 32. It should be noted that the screen 30 is not limited thereto. The screen 30 may have a structure in which the stress luminescent material 31 is held between a pair of substrates. In summary, the screen 30 may have any structure as long as it is formed using the stress luminescent material that emits light upon reception of force.

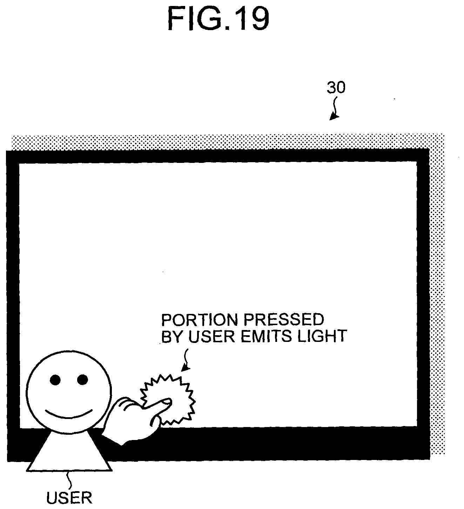

When the user presses a particular portion of the screen 30 configured as described above, the particular portion emits light (see FIG. 19). In the embodiment, the light-emitting point (it can be considered to be equivalent to the irradiation point from the laser pointer in the first embodiment) is detected, and the same pieces of processing as those in the above-mentioned embodiments can be executed.

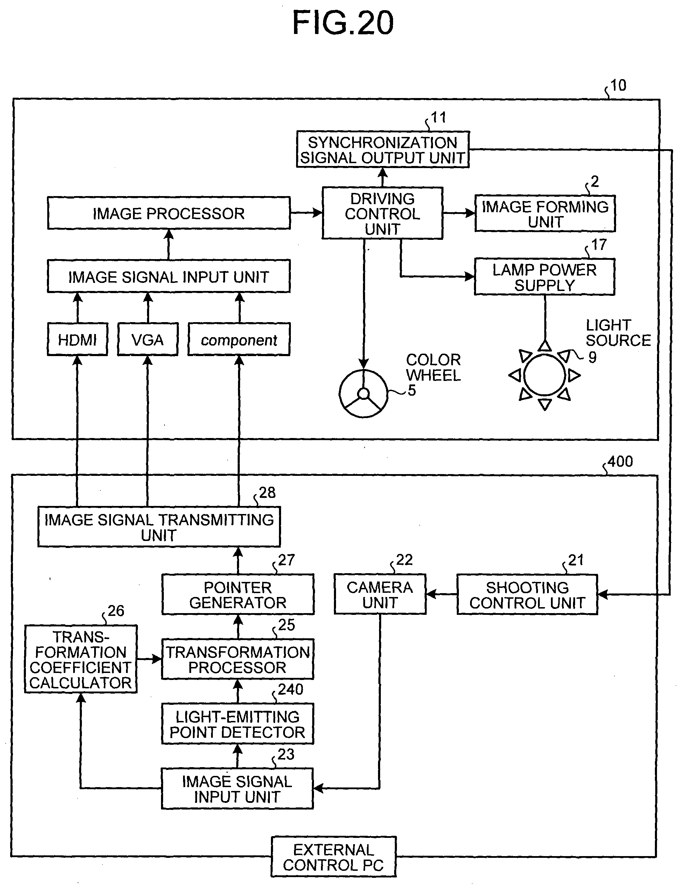

FIG. 20 is a block diagram illustrating the functional configurations of the image projecting device 10 and an external PC 400 in the embodiment. The functional configuration of the image projecting device 10 is the same as those in the above-mentioned embodiments. The external PC 400 includes a light-emitting point detector 240 instead of the above-mentioned irradiation point detector 24. The light-emitting point detector 240 detects a light-emitting point (corresponding to "light spot" in claims) indicating a region on which the stress luminescent material 31 emits light in the screen 30 from the image data shot by the camera unit 22. That is to say, the light-emitting point detector 240 has a function of detecting the light-emitting point that is generated on a portion pressed by the user in the screen 30 from the image data shot by the camera unit 22. In the embodiment, it can be considered that the light-emitting point detector 240 corresponds to a "light spot image detector" in claims and the screen 30 itself corresponds to a "light spot device" in claims.

As in the above-mentioned embodiments, the transformation processor 25 transforms coordinates (x', y') of the light-emitting point on the image data detected by the light-emitting point detector 240 into coordinates (x, y) on the image signal using the above-mentioned parameter H. The pointer generator 27 combines (superimposes) a particular image at the coordinates (x, y) obtained by the transformation by the transformation processor 25 on the image signal so as to generate a projection image signal. The image signal transmitting unit 28 then transmits the projection image signal generated by the pointer generator 27 to the image projecting device 10. With this, the image projecting device 10 projects a projected image on which the particular image is superimposed.

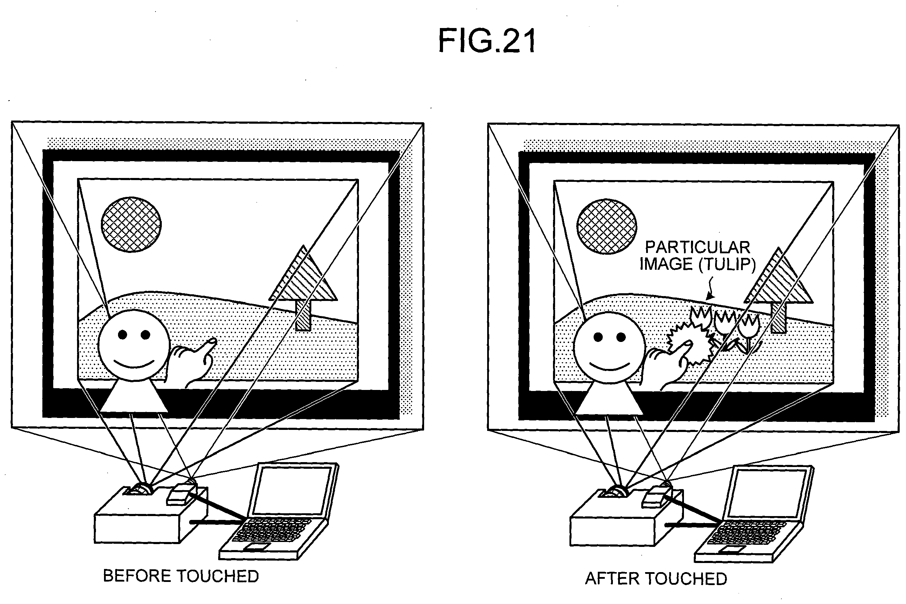

That is to say, in the embodiment, when the user presses the particular portion of the screen 30, the particular image is displayed on the particular portion. Various images can be used as the particular image. For example, an image of tulip can be used as the particular image as illustrated in FIG. 21 (the same holds true for the above-mentioned embodiments).

In addition to the above-mentioned screen 30 (screen formed using the stress luminescent material), a tool using a light-emitting diode (LED) (for example, LED-integrated ballpoint pen) or the like as the light-emitting object can be used as the "light spot device" in the scope of the invention. Also in this case, the light-emitting point can be detected in the same manner as described above, and the same pieces of processing as those in the above-mentioned embodiments can be executed.

A computer program executed in the information processing device in the embodiment is embedded in advance and provided in a read only memory (ROM) or the like. The computer program executed in the information processing device in the embodiment may be recorded and provided in a computer-readable recording medium such as a compact disc read only memory (CD-ROM), a flexible disk (FD), a compact disc recordable (CD-R), and a digital versatile disc (DVD), as an installable or executable file.

The computer program executed in the information processing device in the embodiment may be stored in a computer connected to a network such as the Internet and provided by being downloaded via the network. Furthermore, the computer program executed in the information processing device in the embodiment may be provided or distributed via a network such as the Internet.

The computer program executed in the information processing device in the embodiment has a module structure including the above-mentioned respective parts. As actual hardware, a central processing unit (CPU) (processor) reads and executes the programs from the ROM, so that the above-mentioned respective parts are loaded on a main storage device to be generated on the main storage device.

The information processing device according to the present invention achieves the effect of detecting a pointer with high accuracy without being influenced by an image signal.

Although the invention has been described with respect to specific embodiments for a complete and clear disclosure, the appended claims are not to be thus limited. The invention is defined by the appended claims.

### Reference Signs List

- 2: IMAGE FORMING UNIT
- 3a: OPTICAL SYSTEM
- 3b: PROJECTING SYSTEM
- 4: LIGHT SOURCE
- 5: COLOR WHEEL
- 6: LIGHT TUNNEL
- 7: RELAY LENS
- 8: PLANE MIRROR
- 9: CONCAVE MIRROR
- 10: IMAGE PROJECTING DEVICE
- 11: SYNCHRONIZATION SIGNAL OUTPUT UNIT
- 12: IMAGE PROCESSOR
- 13: IMAGE SIGNAL INPUT UNIT
- 14: DRIVING CONTROL UNIT
- 17: LAMP POWER SUPPLY
- 20: EXTERNAL PC
- 21: SHOOTING CONTROL UNIT
- 22: CAMERA UNIT
- 23: IMAGE SIGNAL INPUT UNIT
- 24: IRRADIATION-POINT DETECTOR
- 25: TRANSFORMATION PROCESSOR
- 26: TRANSFORMATION COEFFICIENT CALCULATOR
- 27: POINTER GENERATOR
- 28: IMAGE SIGNAL TRANSMITTING UNIT
- 30: SCREEN
- 40: LASER POINTER
- 102R: LIQUID CRYSTAL DISPLAY PANEL
- 102G: LIQUID CRYSTAL DISPLAY PANEL
- 102B: LIQUID CRYSTAL DISPLAY PANEL
- 103b: LENS GROUP
- 104: WHITE LIGHT SOURCE
- 108: MIRROR
- 109: DICHROIC MIRROR
- 110: IMAGE PROJECTING DEVICE
- 112: DICHROIC PRISM
- 130: RELAY LENS SYSTEM
- 132: INCIDENT LENS
- 134: RELAY LENS
- 135: OUTPUT LENS
- 200: SCREEN UNIT
- 300: LASER POINTER
- 302: IRRADIATION POINT

## Claims

1. An image projecting system comprising:
an image projecting device (10) that projects image data onto a projection surface (30); and
an information processing device (20) that is connected to the image projecting device (10), wherein
the image projecting device (10) includes:
a driving control unit (14) configured to, for projecting the image data, cause light to pass through filters (5) of a plurality of colors by time unit based on the image data, so as to generate light having a desired color tone and corresponding to the image data;
a setting unit configured to set a color of a light spot of a light spot device (40) that generates the light spot on the projection surface (30) or its vicinity; and
a synchronization signal output unit (11) configured, when the light spot includes a single light component of a single color, to transmit, to the information processing device (20), a synchronization signal that specifies, as a timing at which a scene including the projection surface (30) and its vicinity is to be shot by an image capturing unit (22), a period during which light of a color closest to the set color of the light spot among the colors of the filters (5) is not projected, and
the information processing device (20) includes:
a receiver configured to receive the synchronization signal from the image projecting device (10) ;
a shooting control unit (21) configured to cause the image capturing unit (22) to shoot the scene in accordance with the timing specified by the synchronization signal;
a light spot image detector (24) configured to detect an image of the light spot generated by the light spot device (40) on the projection surface (30) or its vicinity from image data of the scene shot by the image capturing unit (22); and
an image signal transmitting unit (28) configured to transmit projection image data to the image projecting device (10),
the image projecting system being **characterised in that**:
the synchronisation signal output unit (11) is configured, when the light spot includes a plurality of light components of different colors, to transmit, to the information processing device (20), a synchronization signal that specifies, as timings at which a scene including the projection surface (30) and its vicinity is to be shot by the image capturing unit (22), a plurality of periods during which no light is projected onto the filters (5) of which colors are the closest to the respective light components, and
**in that** the shooting control unit (21), when the lights spot includes a plurality of light components of different colors, is configured to cause the image capturing unit (22) to shoot the scene in accordance with the respective timings specified by the synchronization signal.

2. The image projecting system according to claim 1, wherein
the projection surface (30) is formed using a stress luminescent material that emits light upon reception of force, and
the light spot image detector (24) detects a light spot generated on a portion pressed by a user in the projection surface (30) from the image data of the scene shot by the image capturing unit (22).

3. The image projecting system according to claim 1, wherein
the information processing device (20) includes a plurality of image capturing units (22) provided for the respective light components of the light spot, and
the shooting control unit (21) causes the image capturing units (22) to individually shoot the scene in accordance with the respective timings specified for the respective light components of the light spot.

## Patentansprüche

1. Bildprojektionssystem, umfassend:
eine Bildprojektionsvorrichtung (10), die Bilddaten auf eine Projektionsfläche (30) projiziert; und
eine Informationsverarbeitungsvorrichtung (20), die mit der Bildprojektionsvorrichtung (10) verbunden ist, worin die Bildprojektionsvorrichtung (10) einschließt:
eine Ansteuerungssteuerungseinheit (14), die dafür konfiguriert ist, zum Projizieren der Bilddaten auf der Grundlage der Bilddaten zu bewirken, dass Licht pro Zeiteinheit Filter (5) einer Vielzahl von Farben durchläuft, um dadurch Licht zu erzeugen, das einen erwünschten Farbton hat und den Bilddaten entspricht;
eine Einstellungseinheit, die dafür konfiguriert ist, eine Farbe eines Lichtpunkts einer Lichtpunktvorrichtung (40) einzustellen, die den Lichtpunkt auf der Projektionsfläche (30) oder in deren Nähe erzeugt; und
eine Synchronisationssignalausgabeeinheit (11), die dafür konfiguriert ist, wenn der Lichtpunkt eine einzelne Lichtkomponente einer einzelnen Farbe einschließt, ein Synchronisationssignal zur Informationsverarbeitungsvorrichtung (20) zu übertragen, das als eine Zeitvorgabe, zu der eine Szene, welche die Projektionsfläche (30) und ihre Nähe einschließt, durch eine Bilderfassungseinheit (22) aufgenommen werden soll, eine Zeitspanne angibt, während der von den Farben der Filter (5) Licht einer Farbe, die der eingestellten Farbe des Lichtpunkts am nächsten ist, nicht projiziert wird, und
die Informationsverarbeitungsvorrichtung (20) einschließt:
einen Empfänger, der dafür konfiguriert ist, das Synchronisationssignal von der Bildprojektionsvorrichtung (10) zu empfangen;
eine Aufnahmesteuerungseinheit (21), die dafür konfiguriert ist, zu bewirken, dass die Bilderfassungseinheit (22) die Szene gemäß der durch das Synchronisationssignal festgelegten Zeitvorgabe aufnimmt;
einen Lichtpunktbilddetektor (24), der dafür konfiguriert ist, aus Bilddaten der durch die Bilderfassungseinheit (22) aufgenommenen Szene ein Bild des Lichtpunkts zu ermitteln, der durch die Lichtpunktvorrichtung (40) auf der Projektionsfläche (30) oder in deren Nähe erzeugt wird; und
eine Bildsignalübertragungseinheit (28), die dafür konfiguriert ist, Projektionsbilddaten zur Bildprojektionsvorrichtung (10) zu übertragen,
wobei das Bildprojektionssystem **dadurch gekennzeichnet ist, dass**:
die Synchronisationssignalausgabeeinheit (11) dafür konfiguriert ist, wenn der Lichtpunkt eine Vielzahl von Lichtkomponenten unterschiedlicher Farben einschließt, zur Informationsverarbeitungsvorrichtung (20) ein Synchronisationssignal zu übertragen, das als Zeitvorgaben, zu denen eine Szene, welche die Projektionsfläche (30) und ihre Nähe einschließt, durch die Bilderfassungseinheit (22) aufgenommen werden soll, eine Vielzahl von Perioden angibt, während derer kein Licht auf die Filter (5) projiziert wird, deren Farben den jeweiligen Lichtkomponenten am nächsten sind, und
dadurch, dass die Aufnahmesteuerungseinheit (21) dafür konfiguriert ist, wenn der Lichtpunkt eine Vielzahl von Lichtkomponenten unterschiedlicher Farben einschließt, zu bewirken, dass die Bilderfassungseinheit (22) die Szene gemäß den jeweiligen durch das Synchronisationssignal festgelegten Zeitvorgaben aufnimmt.

2. Bildprojektionssystem nach Anspruch 1, worin
die Projektionsfläche (30) unter Verwendung eines spannungslumineszierenden Materials gebildet ist, das bei Krafteinwirkung Licht emittiert, und
der Lichtpunktbilddetektor (24) aus den Bilddaten der durch die Bilderfassungseinheit (22) aufgenommenen Szene einen Lichtpunkt ermittelt, der auf einem durch einen Benutzer gedrückten Abschnitt in der Projektionsfläche (30) erzeugt wird.

3. Bildprojektionssystem nach Anspruch 1, worin
die Informationsverarbeitungsvorrichtung (20) eine Vielzahl von Bilderfassungseinheiten (22) einschließt, die für die jeweiligen Lichtkomponenten des Lichtpunkts vorgesehen sind, und
die Aufnahmesteuerungseinheit (21) bewirkt, dass die Bilderfassungseinheiten (22) die Szene gemäß den jeweiligen Zeitvorgaben, die für die jeweiligen Lichtkomponenten des Lichtpunkts festgelegt sind, einzeln aufnehmen.

## Revendications

1. Système de projection d'image comprenant :
un dispositif de projection d'image (10) qui projette des données d'image sur une surface de projection (30) ; et
un dispositif de traitement d'information (20) qui est connecté au dispositif de projection d'image (10) ; dans lequel :
le dispositif de projection d'image (10) inclut :
une unité de commande de pilotage (14) qui est configurée de manière à ce qu'elle, pour projeter les données d'image, amène la lumière à passer au travers de filtres (5) d'une pluralité de couleurs par unité de temps sur la base des données d'image, de manière à générer une lumière qui présente une tonalité de couleur souhaitée et qui correspond aux données d'image ;
une unité de réglage qui est configurée de manière à ce qu'elle règle une couleur d'un spot lumineux d'un dispositif de spot lumineux (40) qui génère le spot lumineux sur la surface de projection (30) ou à son voisinage ; et
une unité de sortie de signal de synchronisation (11) qui est configurée de manière à ce qu'elle, lorsque le spot lumineux inclut une unique composante de lumière d'une unique couleur, transmette, au dispositif de traitement d'information (20), un signal de synchronisation qui spécifie, en tant que cadencement auquel une scène qui inclut la surface de projection (30) et son voisinage doit faire l'objet d'une prise de vue par une unité de capture d'image (22), une période pendant laquelle la lumière d'une couleur la plus proche de la couleur réglée du spot lumineux prise parmi les couleurs des filtres (5) n'est pas projetée ; et
le dispositif de traitement d'information (20) inclut :
un récepteur qui est configuré de manière à ce qu'il reçoive le signal de synchronisation en provenance du dispositif de projection d'image (10) ;
une unité de commande de prise de vue (21) qui est configurée de manière à ce qu'elle amène l'unité de capture d'image (22) à réaliser une prise de vue de la scène conformément au cadencement qui est spécifié au moyen du signal de synchronisation ;
un détecteur d'image de spot lumineux (24) qui est configuré de manière à ce qu'il détecte une image du spot lumineux qui est généré par le dispositif de spot lumineux (40) sur la surface de projection (30) ou à son voisinage à partir de données d'image de la scène qui fait l'objet d'une prise de vue par l'unité de capture d'image (22) ; et
une unité de transmission de signal d'image (28) qui est configurée de manière à ce qu'elle transmette des données d'image de projection au dispositif de projection d'image (10) ;
le système de projection d'image étant **caractérisé en ce que** :
l'unité de sortie de signal de synchronisation (11) est configurée de manière à ce qu'elle, lorsque le spot lumineux inclut une pluralité de composantes lumineuses de couleurs différentes, transmette, au dispositif de traitement d'information (20), un signal de synchronisation qui spécifie, en tant que cadencements auxquels une scène qui inclut la surface de projection (30) et son voisinage doit faire l'objet d'une prise de vue par l'unité de capture d'image (22), une pluralité de périodes pendant lesquelles aucune lumière n'est projetée sur les filtres (5) dont les couleurs sont les plus proches des composantes lumineuses respectives ; et
**en ce que** l'unité de commande de prise de vue (21) est configurée de manière à ce qu'elle, lorsque le spot lumineux inclut une pluralité de composantes lumineuses de couleurs différentes, amène l'unité de capture d'image (22) à réaliser une prise de vue de la scène conformément aux cadencements respectifs qui sont spécifiés au moyen du signal de synchronisation.

2. Système de projection d'image selon la revendication 1, dans lequel :
la surface de projection (30) est formée en utilisant un matériau luminescent de contrainte qui émet de la lumière suite à la réception d'une force ; et
le détecteur d'image de spot lumineux (24) détecte un spot lumineux qui est généré sur une partie qui est pressée par un utilisateur dans la surface de projection (30) à partir des données d'image de la scène qui fait l'objet d'une prise de vue par l'unité de capture d'image (22).

3. Système de projection d'image selon la revendication 1, dans lequel :
le dispositif de traitement d'information (20) inclut une pluralité d'unités de capture d'image (22) qui sont prévues pour les composantes lumineuses respectives du spot lumineux ; et
l'unité de commande de prise de vue (21) amène les unités de capture d'image (22) à réaliser de façon individuelle une prise de vue de la scène conformément aux cadencements respectifs qui sont spécifiés pour les composantes lumineuses respectives du spot lumineux.
